# EUROPÄISCHE PATENTSCHRIFT

(11) **EP 1 691 049 B1**
(45) Veröffentlichungstag und Bekanntmachung des Hinweises auf die Patenterteilung: **13.06.2007**
(21) Anmeldenummer: 05026360.7
(22) Anmeldetag: 02.12.2005
(51) Int. Cl.: F01N 7/10, F02B 37/02

(54) **Doppelwandiger Abgaskrümmer**
Double-walled exhaus gas manifold
Collecteur d'échappement à double paroi

(30) Priorität: 18.01.2005 DE 102005002250
(43) Veröffentlichungstag der Anmeldung: 16.08.2006
(73) Patentinhaber: Bayerische Motorenwerke Aktiengesellschaft, 80809 München (DE)
(72) Erfinder: Fahl, Thomas, 80802 München (DE)

(56) Entgegenhaltungen:
- EP-A- 0 955 453
- EP-A- 0 999 351
- DE-A1- 3 925 802
- GB-A- 996 055
- PATENT ABSTRACTS OF JAPAN Bd. 011, Nr. 014 (M-553), 14. Januar 1987 (1987-01-14) & JP 61 190122 A (HITACHI LTD), 23. August 1986 (1986-08-23)

## Beschreibung

Die Erfindung betrifft einen doppelwandigen Abgaskrümmer mit den Merkmalen aus dem Oberbegriff des Patentanspruchs 1.

Sie geht von der deutschen Patentschrift DE 43 42 572 C1 aus. In dieser ist ein doppelwandiger Abgaskrümmer für eine Brennkraftmaschine mit einem Abgasturbolader beschrieben. Der doppelwandige Abgaskrümmer besitzt eine flüssigkeitsgekühlte äußere Hülle. Im Inneren dieser äußeren Hülle sind zwei abgasführende Leitungen derart angeordnet, dass jeweils nicht gleichzeitig abgasausstoßende Zylinder zu einer Baugruppe bzw. einem Abgasrohr zusammengefasst sind. Ferner weist der Abgasturbolader turbinenseitig zwei getrennte Abgaseinlässe auf, die jeweils von einem Abgasrohr mit Abgas beaufschlagt werden. Mit dieser zylinderselektiven Anordnung ist es möglich, Abgasstöße auf den Abgasturbolader aufgrund von gleichzeitig Abgas ausstoßenden Zylindern zu vermeiden. Zur Anbindung der Abgasrohre an die Abgaseinlässe innerhalb der wassergekühlten Hülle sind zwei separate Rohrstutzen vorgesehen.

Zum technischen Umfeld wird weiter beispielsweise auf die EP 0 955 453 A2 und die EP 0 999 351 A1 hingewiesen, aus denen doppelwandige Abgaskrümmer mit Blech als Innenwandung bekannt sind. Ferner sind beispielsweise aus der GB 996,055 und der JP 61190122 Abgaskrümmer/Turbolader-Kombinationen bekannt.

Nachteilig an der beschriebenen Ausgestaltung ist die aufwendig zu fertigende Anbindung der Abgasrohre an die Abgaseinlässe des Abgasturboladers.

Aufgabe der vorliegenden Erfindung ist es, den Fertigungsaufwand für einen gattungsgemäßen doppelwandigen Abgaskrümmer zu reduzieren.

Diese Aufgabe ist gemäß Patentanspruch 1 dadurch gelöst, dass die inneren Wandungen aus Blech sind und bis in die Abgaseinlässe ragen. Durch die erfindungsgemäße Ausgestaltung ist weiter eine optimale Trennung von der Dichtfunktion und der Positionierung zwischen gasführenden Rohren und Abgasturbolader gewährleistet. Die Dichtfunktion wird über eine Labyrinthausführung (Überlappung von innerer Wandung und Abgaseinlass) zwischen Abgasturbolader und Abgasrohr gewährleistet, die eine Spielpassung bilden. Die Positionierung des Abgasturboladers in Bezug auf den Abgaskrümmer wird durch den geometrischen Formschluss zwischen den Abgaseinlässen und den inneren Wandungen erreicht. Ferner bietet die vorgeschlagene Konstruktion den Vorteil der guten Wärmeabfuhr aus dem Trennsteg zwischen den Abgaseinlässen zur Vermeidung von Wärmespannungen und daraus resultierenden Wärmerissen.

Weiter ist es in vorteilhafter Weise möglich, die Verbindung zwischen Abgaskrümmer und Abgasturbolader gemäß der Patentansprüche 2 und 3 kostengünstig als geschweißte, geschraubte oder geklemmte Verbindung auszubilden. Im Falle einer lösbaren Verbindung ist eine Dichtung zwischen den Montageflanschen vorzusehen.

Um die Abgaswärmeverluste weiter zu minimieren, kann der Abgaskrümmer gemäß Patentanspruch 4 Luftspalt isoliert sein.

Im Folgenden ist die Erfindung anhand eines bevorzugten Ausführungsbeispieles in einer einzigen Figur näher erläutert.

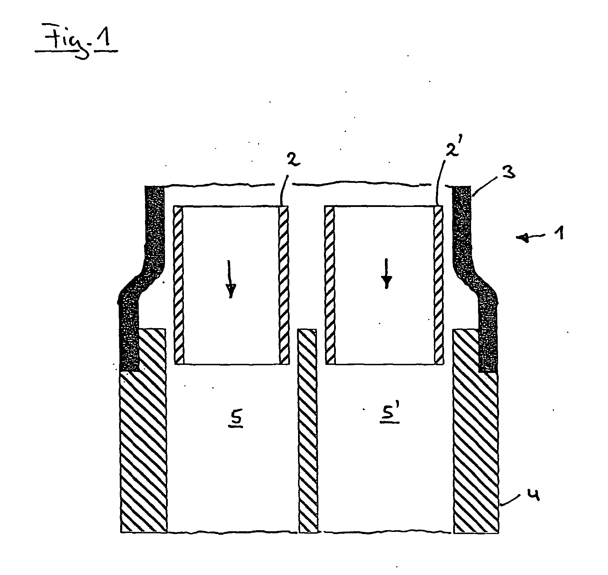

Fig. 1 zeigt in einer Skizze schematisch einen Schnitt durch einen Verbindungsbereich für einen doppelwandigen Abgaskrümmer 1 mit einem Abgasturbolader 4. Der doppelwandige Abgaskrümmer 1 besteht aus zwei inneren Wandungen, 2, 2' und einer äußeren Wandung 3. Die Innenwandungen 2, 2' sind von der äußeren Wandung 3 umhüllt, welche die äußere Geometrie des Abgaskrümmers 1 darstellt. Die zwei inneren Wandungen 2, 2' führen zylinderselektiv Abgas einer nicht dargestellten Brennkraftmaschine in Richtung der Pfeile zum Abgasturbolader 4. Der Abgasturbolader 4, weist zwei Abgaseinlässe 5, 5' für die Turbine auf, ein so genannter "Twin-Scroll-Abgasturbolader".

Erfindungsgemäß sind die inneren Wandungen 2, 2' des Abgaskrümmers 1 aus einem hochtemperaturfesten Blech gefertigt und ragen in die Abgaseinlässe 5, 5' hinein. Die äußere Wandung 3 des Abgaskrümmers 1 umschließt den Bereich der Abgaseinlässe 5, 5' des Abgasturboladers 4 und ist mit diesem radial außen umlaufend verschweißt.

In weiteren Ausführungsbeispielen können die äußere Wandung 3 sowie der Abgasturbolader 4 im Bereich der Abgaseinlässe 5, 5' einen Flansch aufweisen, wobei die Flansche des Abgaskrümmers 1 und des Abgasturboladers 4. miteinander lösbar verbunden werden. Diese Verbindung kann kostengünstig durch Verklemmen oder Verschrauben erfolgen. Im Falle einer lösbaren Verbindung ist vorzugsweise eine Dichtung zwischen dem Abgaskrümmer 1 und dem Abgasturbolader 4 vorzusehen. In dem Bereich, in dem die inneren Wandungen 2, 2' in die Abgaseinlässe 5, 5' ragen, besteht zwischen diesen eine Spieltoleranz, wobei das Spiel dergestalt zu dimensionieren ist, dass noch eine ausreichende Dichtfunktion gewährleistet ist.

Zur Reduzierung von Abgaswärmeverlusten ist weiter vorgesehen, den doppelwandigen Abgaskrümmer 1 als Luftspaltisolierten Abgaskrümmer 1 auszubilden, d. h. der Hohlraum zwischen den inneren Wandungen 2, 2' und der äußeren Wandung 3 ist hermetisch abgeriegelt.

Durch die erfindungsgemäße Ausgestaltung ergeben sich folgende Vorteile:
➢ Kostengünstige, einfache Fertigung der Verbindung Abgaskrümmer 1 und Abgasturbolader;
➢ Sichere Positionierung des Abgasturboladers 4 an dem Abgaskrümmer 1 durch Formschluss;
➢ Möglichkeit der Verbindung von Abgasturbolader 4 und Abgaskrümmer 1 durch eine Schweißverbindung;
➢ Kostengünstige Anbindung des Abgasturboladers 4 an den Abgaskrümmer 1 mittels einer unlösbaren Schweißverbindung oder einer lösbaren Klemm- oder Schraubverbindung;
➢ Sicherstellung der Trennung der Zylindergruppen zur Abfuhr des Abgases;
➢ Trennung der Dichtfunktion zwischen den Zylindergruppen und der Dichtung nach außen;
➢ Möglichkeit der Anbindung eines Luftspaltisolierten Abgaskrümmers 1 an einen Twin-Scroll-Abgasturbolader;
➢ Gute Wärmeabfuhr aus dem Trennsteg zwischen den Abgaseinlässen 5, 5' zur Verminderung von Wärmespannungen und daraus resultierenden Wärmerissen.

### Bezugszeichenliste

- 1: Doppelwandiger Abgaskrümmer
- 2, 2': Innere Wandung
- 3: Äußere Wandung
- 4: Abgasturbolader
- 5, 5': Abgaseinlass

## Patentansprüche

1. Doppelwandiger Abgaskrümmer (1) für eine Brennkraftmaschine mit einem Abgasturbolader (4) der an den Abgaskrümmer (1) anordenbar ist, wobei der Abgaskrümmer (1) zumindest zwei innere Wandungen (2, 2') und eine äußere, die zwei inneren Wandungen (2, 2') umhüllende Wandung (3) zur Befestigung des Abgasturboladers (4) an den Abgaskrümmer (1) aufweist, wobei der Abgasturbolader (4) zumindest zwei zu den inneren Wandungen (2, 2') korrespondierende Abgaseinlässe (5, 5') aufweist und wobei durch die inneren Wandungen (2, 2') Abgas der Brennkraftmaschine zylinderselektiv in die Abgaseinlässe (5, 5') einleitbar ist,
**dadurch gekennzeichnet, dass** die inneren Wandungen (2, 2') aus Blech sind und bis in die Abgaseinlässe (5, 5') ragen.

2. Abgaskrümmer nach Patentanspruch 1,
**dadurch gekennzeichnet, dass** die äußere Wandung (3) mit dem Abgasturbolader (4) im Bereich der Abgaseinlässe (5, 5') verschweißt ist.

3. Abgaskrümmer nach Patentanspruch 1,
**dadurch gekennzeichnet, dass** die äußere Wandung (3) und der Abgasturbolader (4) im Bereich der Abgaseinlässe (5, 5') Montageflansche aufweisen und die Montageflansche lösbar miteinander verbunden sind.

4. Abgaskrümmer nach einem der zuvor genannten Patentansprüche,
**dadurch gekennzeichnet, dass** der Abgaskrümmer (1) Luftspalt isoliert ist.

## Claims

1. A double-walled exhaust manifold (1) for an internal combustion engine, comprising a turbocharger (4) disposed on the exhaust manifold (1), wherein the exhaust manifold (1) has at least two inner walls (2, 2') and an outer wall (3) surrounding the two inner walls (2, 2') for fastening the turbocharger (4) to the exhaust manifold (1), wherein the turbocharger (4) has at least two exhaust inlets (5, 5') corresponding to the inner walls (2, 2') and wherein exhaust gas from the engine can be introduced through the inner walls (2, 2') into the exhaust inlets (5, 5') of the cylinders selectively,
**characterised in that** the inner walls (2, 2') are of sheet metal and project into the exhaust inlets (5, 5').

2. An exhaust manifold according to claim 1, **characterised in that** the outer wall (3) is welded to the turbocharger (4) in the region of the exhaust inlets (5, 5').

3. An exhaust manifold according to claim 1, **characterised in that** the outer wall (3) and the turbocharger (4) have assembly flanges in the region of the exhaust inlets (5, 5') and the assembly flanges are releasably connected to one another.

4. An exhaust manifold according to any of the previously-mentioned claims,
**characterised in that** the exhaust manifold (1) is air-gap insulated.

## Revendications

1. Collecteur d'échappement à double paroi (1) pour un moteur à combustion interne muni d'un turbocompresseur à gaz d'échappement (4) pouvant être raccordé au collecteur d'échappement (1), le collecteur d'échappement (1) présentant au moins deux parois intérieures (2, 2') et une paroi extérieure (3) enveloppant les deux parois intérieures (2, 2') pour fixer le turbocompresseur à gaz d'échappement (4) au collecteur d'échappement (1), le turbocompresseur d'échappement (4) présentant au moins deux admissions de gaz d'échappement (5, 5') correspondant avec les parois intérieures (2, 2'), et des gaz d'échappement du moteur à combustion interne pouvant être introduits par les parois intérieures (2, 2') dans les admissions de gaz d'échappement (5, 5') de façon sélective pour chaque cylindre,
**caractérisé en ce que**
les parois intérieures (2, 2') sont en tôle et font saillie dans les admissions de gaz d'échappement (5, 5').

2. Collecteur d'échappement selon la revendication 1,
**caractérisé en ce que**
la paroi extérieure (3) est soudée au turbocompresseur à gaz d'échappement (4) dans la zone des admissions de gaz d'échappement (5, 5').

3. Collecteur d'échappement selon la revendication 1,
**caractérisé en ce que**
dans la zone des admissions de gaz d'échappement (5, 5') la paroi extérieure (3) et le turbocompresseur à gaz d'échappement (4) présentent des brides de montage, et les brides de montage sont reliées l'une à l'autre de façon amovible.

4. Collecteur d'échappement selon l'une quelconque des revendications précédentes,
**caractérisé en ce que**
le collecteur d'échappement (1) est isolé au niveau de la fente d'air.
